Europäisches Patentamt

(19) European Patent Office

Office européen des brevets

(11) Numéro de publication: **0 023 175 B1**

# FASCICULE DE BREVET EUROPEEN

(45) Date de publication du fascicule du brevet:
07.09.83

(51) Int. Cl.³: **G 11 B 5/00** // G11B5/38

(21) Numéro de dépôt: **80401050.2**

(22) Date de dépôt: **11.07.80**

(54) Transducteur magnéto-électrique pour système d'enregistrement magnétique, et système d'enregistrement comportant un tel transducteur.

(30) Priorité: **20.07.79 FR 7918811**

(43) Date de publication de la demande:
**28.01.81 Bulletin 81/4**

(45) Mention de la délivrance du brevet:
**07.09.83 Bulletin 83/36**

(84) Etats contractants désignés:
**DE GB IT**

(56) Documents cités:
**DE-A-2 843 512**
**FR-A-1 224 515**
**FR-A-2 318 479**
**US-A-2 975 241**
**US-A-3 146 317**
**ELECTRONICS INTERNATIONAL, Vol. 46 No. 3, 1 février 1973, New York US M. MURAI »Hall-Effect Magnetic Sensor Reads Data at any Speed«, pages 91—96**

(73) Titulaire: **L.C.C.-C.I.C.E. - COMPAGNIE EUROPEENNE DE COMPOSANTS ELECTRONIQUES, 101, Boulevard Murat, F-75781 Paris Cedex 16 (FR)**

(72) Inventeur: **Chabrolle, Jacques, "THOMSON-CSF" SCPI 173, Bld Haussmann, F-75360 Paris Cedex 08 (FR)**

(74) Mandataire: **Vesin, Jacques et al, THOMSON-CSF SCPI 173, Bld Haussmann, F-75379 Paris Cedex 08 (FR)**

# Transducteur magnéto-électrique pour système d'enregistrement magnétique, et système d'enregistrement comportant un tel transducteur

La présente invention se rapporte au domaine de l'enregistrement magnétique, et plus précisément aux transducteurs magnéto-électriques qui y sont mis en oeuvre. Elle concerne plus particulièrement un transducteur magnéto-électrique pour système d'enregistrement et/ou de lecture d'informations magnétiques, sur un support aimantable et comportant, d'une part, un circuit magnétique en forme d'anneau plan, avec des surfaces latérales externe et interne cylindriques, de génératrices perpendiculaires au plan de l'anneau, cet anneau présentant un entrefer débouchant sur lesdites surfaces, et d'autre part, un enroulement électrique d'écriture en forme de bobinage entourant l'anneau.

Dans ce domaine, on fait appel à une base-support non magnétique en forme de bande ou de disque souple, recouverte d'une couche d'un matériau ferro-magnétique qui en constitue la partie active.

Ce support d'enregistrement est déplacé en vis-à-vis d'un élément transducteur, comportant un circuit magnétique en forme d'anneau interrompu par un entrefer très étroit, de longueur comprise typiquement entre 1 et 10 $\mu$, un circuit électrique, constitué par des enroulements en forme de bobines, entourant le circuit magnétique.

Deux fonctions peuvent être assumées par un tel transducteur. Si l'on applique une tension électrique alternative aux bornes des enroulements, un flux magnétique est créé dans le circuit magnétique, déterminant un épanouissement dans l'air des lignes de force d'un champ magnétique au niveau de l'entrefer; le support mobile, qui défile devant celle-ci, est ainsi magnétisé, de façon permanente, suivant une loi de variations identique à celle de la tension appliquée au transducteur. Celui-ci assume ainsi la fonction de transducteur ou »tête« d'enregistrement, et cela quelle que soit la vitesse du support magnétique.

Mais dans beaucoup d'applications, il peut assumer une seconde fonction: si l'on fait repasser la bande magnétisée une deuxième fois devant l'entrefer, elle crée un flux magnétique variable dans le circuit magnétique, par un phénomène symétrique du précédent, suivant une loi de variations identique à celle de la tension appliquée au transducteur dans la phase d'enregistrement; le transducteur assume ainsi la fonction de »tête« de lecture, après que les variations de flux aient été converties en variations de tension par un moyen convenable.

Plusieurs phénomènes physiques ont déjà été mis à contribution pour réaliser cette conversion.

Le plus simple consiste à utiliser les mêmes enroulements qu'à l'enregistrement, et à recueillir les tensions développées à leurs bornes, suivant les lois de l'électromagnétisme. Un grave inconvénient s'attache cependant à une telle exploitation, lié au fait que les tensions obtenues e ne sont pas proportionnelles au flux magnétique $\Phi$ lui-même, mais à la dérivée première de celui-ci par rapport au temps:

$$e = -K \frac{d\Phi}{dt}$$

où K est une constante.

La tension recueillie e dépend donc de la vitesse de défilement du support magnétique; elle diminue avec elle et s'annule lorsque le support s'arrête.

C'est pourquoi on a fait appel à un autre phénomène physique, celui connu sous le nom d'effet Hall, et qui est l'apparition d'une résistance variable de certains matériaux, comportant notamment arsenic, indium, et/ou phosphore, tels que l'In As P, en fonction d'un champ magnétique qui leur est appliqué; la loi de variation de cette magnétorésistance est en effet linéaire en fonction de ce champ magnétique. Le signal de lecture obtenu a alors un niveau de sorite indépendant de la vitesse de défilement de la bande ou du disque support de l'enregistrement, y compris l'arrêt complet de ce support.

Une limitation de base s'attache cependant à une exploitation de l'effet Hall dans le domaine des »têtes«: c'est le fait que, comme tous les phénomènes mettant en oeuvre une résistance, cet effet n'est pas réversible, et que, par conséquent, le transducteur à effet Hall ne permet pas l'enregistrement, mais seulement la lecture.

Il résulte de ces limitations que les enregistrements magnétiques devant fonctionner, dans le domaine de l'instrumentation par exemple, doivent être munis de deux têtes distinctes, l'une servant à l'enregistrement, du type électromagnétique à enroulements bobinés, l'autre à la lecture, avec une magnéto-résistance se présentant sous la forme d'un bloc disposé dans le flux du circuit magnétique, habituellement dans und entrefer de ce circuit, ménagé à cet effet.

Il est connu du brevet français 1 224 515, une tête de lecture/écriture sur support magnétique comportant un noyau ferro-magnétique en forme d'anneau plan muni d'un entrefer et d'un bobinage. Un capteur à effet Hall, placé dans un entrefer spécial ou dans l'entrefer de lecture/écriture, permet la détection des informations présentes sur le support magnétique, quelle que soit la vitesse de défilement de celui-ci. Ce capteur peut être utilisé comme moyen de lecture, soit seul, soit en combinaison avec les informations issues du bobinage, de manière à la réponse de la tête ou contrôler l'enregistrement réalisé par la tête via le bobinage et l'entrefer.

Une telle structure tête de lecture/écriture présente cependant l'inconvénient d'interrompre le circuit magnétique et d'introduire ainsi une réluctance néfaste dans le bon fonctionnement de la tête. Plus récemment, il a été proposé dans

ie brevet français 2 318 479, figure 2, un transducteur magnéto-électrique constitué de deux bras dont les extrémités se chevauchent latéralement, formant un premier entrefer au voisinage immédiat d'un support d'informations aimantable. L'espace compris entre les deux bras forme, à une certaine distance de l'endroit de chevauchement, un deuxième entrefer surplombé par un élément de lecture magnéto-sensible. Bien que n'exigeant pas une interruption supplémentaire du circuit magnétique, un tel transducteur nécessite cependant une réluctance élevée entre ses deux bras au niveau du deuxième entrefer de manière à sensibiliser suffisamment l'élément magnéto-sensible au cours de l'opération de lecture. De plus, la structure très particulière de cette tête magnétique avec ses deux bras qui se chevauchent la rend difficilement réalisable par une technique autre que le dépôt en »couches minces«, technique longue et onéreuse ainsi que l'on peut s'en rendre compte à la lecture de ladite demande de brevet.

L'invention permet d'éviter les différents inconvénients rencontrés dans la technique antérieure. Dans ce but, le transducteur magnéto-électrique d'enregistrement et/ou de lecture d'informations magnétiques selon l'invention est caractérisé, suivant la revendication n° 1, en ce qu'il comporte un élément de lecture magnéto-sensible disposé en vis-à-vis de l'entrefer unique, sur la surface latérale interne de l'anneau plan formant le circuit magnétique, dans le champ de fuite dudit entrefer et en ce que la canalisation des lignes de force dudit champ de fuite traversant ledit élément de lecture magnéto-sensible est proprement adaptée à la position de cet élément grâce à la forme de ladite surface latérale interne dans la région de l'entrefer.

Selon un mode préférentiel de réalisation, les portions des surfaces cylindriques externe et interne sur lesquelles débouche l'entrefer sont respectivement convexe et concave, le rayon de la surface cylindrique interne étant de préférence inférieur au rayon de la surface cylindrique externe, l'élément magnéto-sensible pouvant au moins partiellement être logé dans la cavité créée dans ladite surface cylindrique interne.

Par ailleurs, la magnéto-résistance présente dans le transducteur de l'invention permet, pendant la phase d'enregistrement, de connaître directement l'état magnétique, en valeur absolue, du circuit de la tête, permettant de surveiller le déroulement correct de l'enregistrement.

De plus, dans un certain nombre d'utilisations pratiques, une proportionnalité ou »linéarité«, aussi bonne que possible, est recherchée entre le signal appliqué, à l'enregistrement, aux enroulements de la tête magnétique, et le champ magnétique régnant dans l'entrefer utile, dont, comme on l'a indiqué plus haut, une partie seulement des lignes de force s'épanouit dans l'air pour magnétiser le support magnétique qui défile à son contact, devant la face active de la tête.

Or, ce champ magnétique utile est impossible à mesurer par un moyen magnétométrique, la présence du support magnétique et des organes mécaniques assurant son bon défilement s'y opposant totalement.

En revanche, le côté interne de l'anneau constituant le circuit magnétique se prête à la mise en place d'un élément de mesure magnétométrique, et, selon l'invention, on y fait appel à un élément magnétorésistant à effet Hall pour connaître ainsi, avec précision, la valeur du champ magnétique utile délivré par l'entrefer, celui du côté interne lui étant proportionnel.

L'invention concerne également un système d'enregistrement et/ou de lecture magnétique comportant un transducteur (ou tête) magnétique coopérant avec un support magnétique et/ou magnétisable pour l'enregistrement et/ou la lecture d'informations sur ledit support, ce système étant caractérisé en ce qu'il comporte une tête magnétique conforme aux caractéristiques énoncées ci-dessus, l'enroulement commandant l'enregistrement des informations sur le support via l'entrefer tandis que l'élément magnéto-sensible permet, via l'entrefer, la lecture des informations présentes sur ledit support.

Le signal fourni par l'élément de mesure peut alors être avantageusement exploité pour linéariser le champ utile, par exemple en mettant en oeuvre un circuit de contre-réaction en boucle commandé par l'élément magnéto-résistant.

L'invention sera mieux comprise à l'aide de la description ci-après, en s'appuyant sur les figures annexées, où:

— la figure 1 représente un premier mode de réalisation du transducteur magnéto-électrique de l'invention;

— la figure 2 représente une variante avantageuse de ce transducteur;

— la figure 3 représente un système d'enregistrement et de lecture mettant en oeuvre le transducteur de l'invention;

— la figure 4 représente un autre mode de réalisation du système d'enregistrement et de lecture, comportant une boucle de contre-réaction de linéarisation.

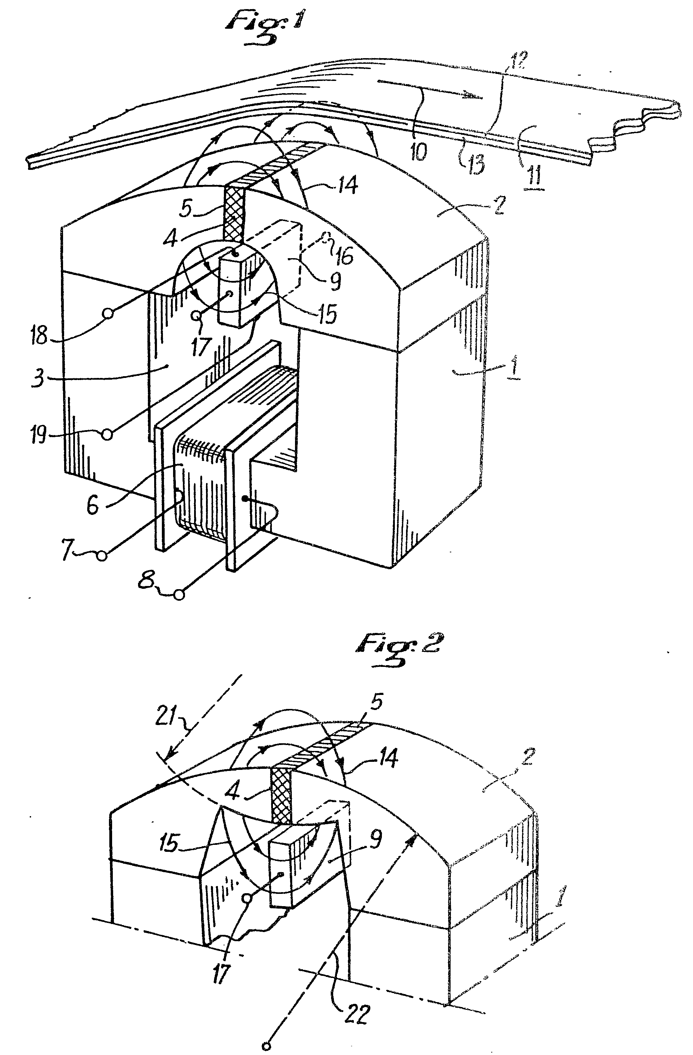

La figure 1 représente un premier mode de réalisation du transducteur magnéto-électrique de l'invention.

Il comporte un circuit magnétique 1, de forme générale en anneau à section rectangulaire, dont les surfaces latérales externe 2, et interne 3, sont des portions de cylindre dont les génératrices sont perpendiculaires au plan de l'anneau.

Ce circuit présente un entrefer 4, dans lequel une cale 5, en matériau non-magnétique, est présente pour définir avec précision la longueur de cet entrefer, qui est une donnée fondamentale dans les applications. Le circuit peut être réalisé dans tout matériau de caractéristiques magnétiques bien adaptées, tel qu'un alliage métallique ferro-magnétique doux, ou un ferrite.

Le transducteur comporte, par ailleurs, des moyens électriques, et, selon l'invention, de deux types.

Le premier moyen est un enroulement 6, en forme de bobine, comportant deux bornes 7 et 8, disposé autour du circuit magnétique 1; le second moyen est un élément magnéto-résistant 9, du type dit »à effet Hall«, disposé au voisinage immédiat de l'entrefer utile 4, sur la face interne 3, de l'anneau.

Un tel transducteur fonctionne de la façon suivante, suivant deux phases correspondant respectivement à l'enregistrement et à la lecture.

Un support d'enregistrement magnétisable 11, représenté sur la figure en forme de bande, défile dans le sens de la flèche 10 devant l'entrefer utile 4, en vis-à-vis de la face externe 2 de l'anneau.

Cette bande se compose d'une base mécanique souple 12, et d'une couche active ferro-magnétique aimantable 13.

Un courant électrique étant appliqué aux bornes 7 et 8 de l'enroulement 6, crée un flux magnétique dans le circuit 1, dont une partie des lignes de force s'épanouit en 14 et 15 sur les deux faces externe 2 et interne 3 de ce circuit. Ce champ magnétique de fuite externe aimante la couche 13 de la bande-support d'enregistrement 11.

Le second moyen électrique 9, constitué par une magnéto-résistance comportant deux bornes 16 et 17 pour l'introduction du courant l'excitation nécessaire, est soumis au champ de fuite interne, par les lignes de force 15, qui détermine l'apparition d'un signal électrique aux bornes 18 et 19 de la magnéto-résistance.

Ce signal de lecture est linéairement lié à la valeur du champ magnétique, et permet par conséquent, même aux faibles vitesses de défilement de la bande, de connaître celui-ci avec précision, soit pour contrôle instantané et permanent du bon déroulement de l'enregistrement, pendant ou après l'enregistrement lui-même, soit, comme on le montre plus loin, dans un but d'amélioration du signal enregistré.

La figure 2 représente une variante avantageuse du transducteur de l'invention.

Elle vise à rendre identique les deux flux de fuite externe 14 et interne 15 existant dans la région de l'entrefer 4, l'influence de la présence éventuelle d'une bande étant négligeable.

Or la répartition des lignes de force au voisinage d'un entrefer dépend de la forme des surfaces du circuit magnétique dans cette région, et en particulier des rayons de courbure.

Suivant cette variante de l'invention, on confère aux faces externe et interne de l'anneau, dans la région de l'entrefer, des rayons de courbure 21 et 22 identiques pour les deux portions de cylindre qui y définissent les surfaces externe et interne de cette région. Il y a alors des grandeurs et des répartitions géométriques identiques du champ magnétique sur les deux surfaces, et la magnéto-résistance 9 rend compte ainsi avec précision de celles qui existent dans la région occupée par la bande magnétique.

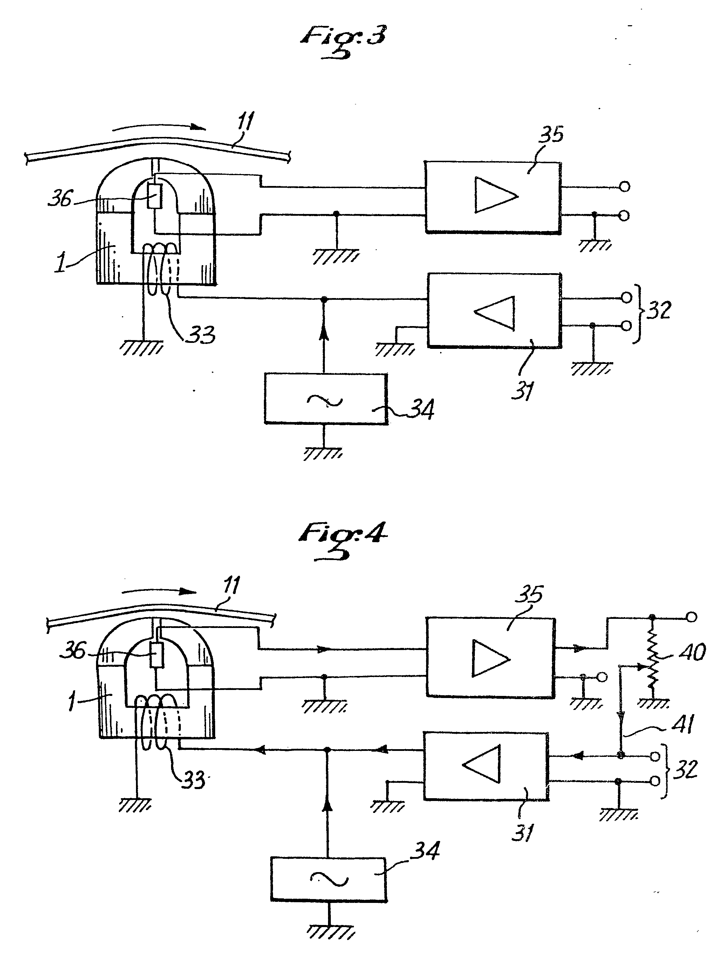

La figure 3 représente, suivant une vue schématique, un système d'enregistrement et de lecture d'une bande magnétique, fournissant un exemple de mise en oeuvre d'un transducteur magnéto-électrique selon l'invention.

Il comporte un amplificateur d'enregistrement 31, avec des bornes d'entrée 32 pour le signal à enregistrer, et des bornes de sortie appliquant ce signal à un enroulement 33 du transducteur; suivant une disposition connue, un oscillateur 34 applique simultanément à cet enroulement un signal alternatif dit de polarisation haute fréquence.

Le système comporte, ensuite, un amplificateur de lecture 35, avec des bornes d'entrée connectées à la magnéto-résistance 36, qui recueille les variations de flux existant dans le circuit magnétique 1; cet amplificateur fournit ainsi, à ses bornes de sortie, un signal amplifié, soit à l'enregistrement, soit à la lecture, pour les diverses applications pratiquées.

La figure 4 représente, suivant une vue schématique, un système d'enregistrement et de lecture d'une bande magnétique, comportant une boucle de contre-réaction de linéarisation mettant en oeuvre le transducteur magnéto-électrique selon l'invention.

Ce système comprend les mêmes éléments que le système de la figure 3, mais leur mise en oeuvre est rendue plus avantageuse par une coopération entre les circuits électriques d'enregistrement et de lecture. On a indiqué plus haut que, pendant la phase d'enregistrement, les limitations à la bonne proportionnalité, ou linéarité, entre le signal électrique appliqué à l'enroulement et le champ magnétique utile régnant dans la région de l'entrefer, étaient dues essentiellement à des phénomènes de saturation du matériau magnétique, et de la répartition des lignes de force autour de l'entrefer en fonction de la fréquence. Grâce au transducteur magnéto-électrique selon l'invention, on exploite, pendant la phase d'enregistrement, le signal fourni par la magnéto-résistance, qui rend compte de l'état magnétique réel de la région de l'entrefer, pour l'opposer, en contre-réaction, au signal appliqué à l'enroulement 33.

Pour cela, la borne de sortie de l'amplificateur de lecture 35 est reliée, à travers un pont de résistances ajustables 40, en parallèle, suivant 41, sur la borne d'entrée de l'amplificateur d'enregistrement 31. Suivant les lois connues régissant le mécanisme de la contre-réaction, il y a alors linéarisation de l'ensemble du processus d'enregistrement, et, en conséquence, amélioration de la courbe de transfert finale de la bande magnétique, par utilisation du transducteur électro-magnétique de l'invention.

On doit remarquer que, dans tout ce qui précède, l'élément magnéto-sensible mis en oeuvre est une magnéto-résistance du type dit »à effet Hall«; mais l'utilisation de tout autre élément magnéto-sensible dont le signal de sortie est linéairement lié au champ magnétique appliqué est comprise dans le domaine de l'invention.

## Revendications

1. Transducteur magnéto-électrique pour système d'enregistrement et/ou de lecture d'informations magnétiques, sur un support aimantable (11), comportant un circuit magnétique (1) en forme d'anneau plan, avec des surfaces latérales externe (2) et interne (3) cylindriques, de génératrices perpendiculaires au plan de l'anneau, cet anneau présentant un entrefer unique (4) débouchant sur lesdites surfaces, et, une part un enroulement électrique (6) d'écriture en forme de bobinage entourant l'anneau, d'autre part, un élément de lecture magnéto-sensible, caractérisé en ce que l'élément de lecture magnéto-sensible (9) est disposé en vis-à-vis de l'entrefer (4) unique sur la surface latérale interne de l'anneau dans le champ de fuite dudit entrefer (4) et en ce que la canalisation des lignes de force dudit champ de fuite traversant ledit élément de lecture magnéto-sensible (9) est proprement adaptée à la position de cet élément grâce à la forme de ladite surface latérale interne (3) dans le région de l'entrefer.

2. Transducteur magnéto-électrique suivant la revendication 1, caractérisé en ce que les portions des surfaces cylindriques externe (2) et interne (3) sur lesquelles débouche l'entrefer (4) sont respectivement convexe et concave.

3. Transducteur magnéto-électrique selon la revendication 2, caractérisé en ce que le rayon de la surface cylindrique interne (3) est inférieur au rayon de la surface cylindrique externe (2).

4. Transducteur magnéto-électrique selon la revendication 1, caractérisé en ce que les portions des surfaces cylindriques externe (2) et interne (3) sur lesquelles débouche l'entrefer (4) sont convexes.

5. Transducteur magnéto-électrique selon la revendication 4, caractérisé en ce que les surfaces cylindriques interne (3) et externe (2) sont sensiblement de même rayon.

6. Transducteur magnéto-électrique selon l'une des revendications 3 ou 5, caractérisé en ce que l'élément magnéto-sensible (9) est logé au moins partiellement dans la cavité créée dans ladite surface cylindrique interne (3).

7. Transducteur magnéto-électrique selon la revendication 1, caractérisé en ce que ledit élément magnéto-sensible est un élément »à effet Hall« ou un élément magnéto-résistant.

8. Système d'enregistrement et/ou de lecture magnétique comportant une tête magnétique coopérant avec un support magnétique et/ou magnétisable pour l'enregistrement et/ou la lecture d'informations sur ledit support, caractérisé en ce que la tête magnétique est conforme à l'une des revendications précédentes, l'enroulement (6) commandant l'enregistrement des informations sur le support (11) via l'entrefer (4) tandis que l'élément magnéto-sensible (9) permet, via l'entrefer (4), la lecture des informations présentes sur ledit support (11).

9. Utilisation du transducteur selon l'une des revendications précédentes pour linéariser de manière connue le champ magnétique délivré par l'entrefer au cours de l'enregistrement d'informations sur le support aimantable.

## Patentansprüche

1. Magneto-elektrischer Wandler für ein System zum Aufzeichnen und/oder Auslesen von magnetischen Informationen auf einem magnetisierbaren Träger (11), mit einem Magnetkreis (1) in Form eines ebenen Ringes, mit einer zylindrischen äußeren (2) und einer zylindrischen inneren seitlichen Oberfläche (3), die zur Ebene des Ringes senkrechte Mantellinien aufweisen, wobei dieser Ring einen einzigen Magnetspalt (4) aufweist, der in den genannten Oberflächen mündet, und zum einen mit einer elektrischen Schreibwicklung (6) in Form einer den Ring umgebenden Spule und zum anderen einem magnetisch empfindlichen Leseelement, dadurch gekennzeichnet, daß das magnetisch empfindliche Leseelement (9) gegenüber dem einzigen Magnetspalt auf der inneren seitlichen Oberfläche des Ringes in dem Streufeld des genannten Magnetspaltes (4) angeordnet ist und daß die Führung der Feldlinien des Streufeldes, welche das magnetisch empfindliche Leseelement (9) durchqueren, in geeigneter Weise an die Lage dieses Elementes angepaßt ist durch die Form der genannten inneren seitlichen Oberfläche (3) im Gebiet des Magnetspaltes.

2. Magneto-elektrischer Wandler nach Anspruch 1, dadurch gekennzeichnet, daß diejenigen Teile der zylindrischen äußeren (2) und der zylindrischen inneren Oberfläche (3), an denen der Magnetspalt (4) mündet, konvex bzw. konkav sind.

3. Magneto-elektrischer Wandler nach Anspruch 2, dadurch gekennzeichnet, daß der Radius der zylindrischen inneren Oberfläche (3) kleiner ist als der Radius der zylindrischen äußeren Oberfläche (2).

4. Magneto-elektrischer Wandler nach Anspruch 1, dadurch gekennzeichnet, daß diejenigen Teile der zylindrischen äußeren (2) Oberfläche und der inneren (3) Oberfläche, an denen der Magnetspalt (4) mündet, konvex sind.

5. Magneto-elektrischer Wandler nach Anspruch 4, dadurch gekennzeichnet, daß die zylindrische innere (3) und die zylindrische äußere (2) Oberfläche im wesentlichen denselben Radius aufweisen.

6. Magneto-elektrischer Wandler nach einem der Ansprüche 3 und 5, dadurch gekennzeichnet, daß das magnetisch empfindliche Element (9) wenigstens teilweise in dem Hohlraum angeordnet ist, der in der genannten inneren zylindrischen Oberfläche (3) gebildet ist.

7. Magneto-elektrischer Wandler nach Anspruch 1, dadurch gekennzeichnet, daß das magnetisch empfindliche Element ein Halleffekt-Element oder ein magneto-resistives Element ist.

8. Magnetisches Aufzeichnungs- und/oder Lesesystem mit einem Magnetkopf, welcher mit einem magnetischen Träger und/oder magnetisierbaren Träger zur Aufzeichnung und/oder zum Auslesen von Informationen auf diesem Träger zusammenwirkt, dadurch gekennzeichnet, daß der Magnetkopf gemäß einem der vorstehenden Ansprüche ausgebildet ist und die Wicklung (6) die Aufzeichnung der Informationen auf dem Träger (11) über den Magnetspalt (4) steuert, während das magnetisch empfindliche Element (9) durch den Magnetspalt (4) hindurch das Auslesen der auf dem genannten Träger (11) vorhandenen Informationen gestattet.

9. Verwendung des Wandlers nach einem der vorstehenden Ansprüche zur an sich bekannten Linearisierung des Magnetfeldes, das von dem Magnetspalt während der Aufzeichnung von Informationen auf dem magnetisierbaren Träger abgegeben wird.

## Claims

1. Magneto-electrical transducer for a system of recording and/or reading magnetic information on a magnetizable carrier (11), comprising a magnetic circuit (1) in the form of a plane ring, having lateral outer (2) and inner (3) cylindrical surfaces the generatrices of which are perpendicular to the plane of the ring, said ring having a single gap (4) opening into said surfaces, and, on the one hand, an electrical recording winding (6) formed of a coil surrounding said ring and, on the other hand, a magnetically sensitive reading member, characterized in that the magnetically sensitive reading member (9) is located in front of the single gap (4) on the lateral inner surface of the ring within the leakage field of said gap (4), and in that the force lines of said leakage field crossing said magnetically sensitive reading member (9) are channelled in a manner correctly adapted to the position of said member due to the form of said lateral inner surface (3) in the region of the gap.

2. Magneto-electrical transducer in accordance with claim 1, characterized in that those portions of the outer (2) and inner (3) cylindrical surfaces at which said gap (4) opens, are convex and concave, respectively.

3. Magneto-electrical transducer in accordance with claim 2, characterized in that the radius of the inner cylindrical surface (3) is smaller than the radius of the outer cylindrical surface (2).

4. Magneto-electrical transducer in accordance with claim 1, characterized in that those portions of the cylindrical outer (2) and inner (3) surfaces on which the gap (4) opens are convex.

5. Magneto-electrical transducer in accordance with claim 4, characterized in that the inner (3) and outer (2) cylindrical surfaces have substantially the same radius.

6. Magneto-electrical transducer in accordance with any of claims 3 and 5, characterized in that the magnetically sensitive member (9) is at least partially received in the cavity formed in said inner cylindrical surface (3).

7. Magneto-electrical transducer in accordance with claim 1, characterized in that said magnetically sensitive member is a »Hall effect« member or a magneto-resistive member.

8. System for magnetic recording and/or reading comprising a magnetic head cooperating with a magnetic carrier and/or magnetizable carrier for recording and/or reading information on said carrier, characterized in that the magnetic head is formed in accordance with any of the preceding claims, the winding (6) controlling the recording of the information on the carrier (11) through the gap (4), while the magnetically sensitive member (9) allows the reading of the information present on said carrier (11) through the gap (4).

9. Use of the transducer in accordance with any of the preceding claims for linearizing, in a manner known per se, the magnetic field emerging from the gap during recording of information on the magnetizable carrier.

0 023 175

*Fig:1*

5
4
14
2
16
9
15
18
17
3
1
19
6
7
8

*Fig:2*

21
5
14
4
2
15
9
1
17
22

7

0 023 175

## Fig.3

## Fig.4

65

9